# EUROPÄISCHE PATENTSCHRIFT

(11) **EP 0 549 860 B1**
(45) Veröffentlichungstag und Bekanntmachung des Hinweises auf die Patenterteilung: **30.10.1996**
(21) Anmeldenummer: 92117357.1
(22) Anmeldetag: 15.11.1988
(51) Int. Cl.: F16L 37/133

(54) **Vorrichtung zum gegenseitigen Verbinden von zwei Leitungen, insbesondere Kraftstoffleitungen**
Coupling device for two conducts, in particular for fuel conducts
Dispositif d'accouplement de deux conduites, en particulier pour des conduites de carburant

(30) Priorität: 05.12.1987 DE 3741250
(43) Veröffentlichungstag der Anmeldung: 07.07.1993
(62) Teilanmeldung aus: 88119006.0
(73) Patentinhaber: ARMATURENFABRIK HERMANN VOSS GMBH & CO., D-51688 Wipperfürth (DE)
(72) Erfinder: Rösch, Volker, Dr., W-4330 Mülheim (Ruhr) (DE); Goller, Bernd, W-5272 Wipperfürth (DE)
(74) Vertreter: Patentanwälte Dr. Solf & Zapf

(56) Entgegenhaltungen:
- DE-A- 1 936 766
- FR-A- 2 392 310
- US-A- 3 584 902
- US-A- 4 398 757

## Beschreibung

Die Erfindung betrifft eine Vorrichtung zum gegenseitigen Verbinden von zwei Rohr- und/oder Schlauchleitungen, insbesondere von Kraftstoffleitungen, gemäß dem Oberbegriff des Patentanspruchs 1.

Eine derartige Vorrichtung ist aus der DE-A-1 936 766 bekannt, allerdings ist diese als insbesondere für Gartenschläuche, d.h. für flexible Wasserschläuche, geeignete Steckkupplungen ausgebildet. Hierbei sind beide Teile, d.h. sowohl das Aufnahmeteil als auch das Steckteil, als Kunststoff-Spritzteile ausgebildet, was aufgrund einer relativ komplizierten Raumform und der hierfür erforderlichen Spritzwerkzeuge zu hohen Herstellungskosten führt.

Auch die US-A-4 398 757 beschreibt eine Verbindungsvorrichtung, deren Einzelteile offensichtlich ebenfalls als Formteile ausgebildet sind.

Der vorliegenden Erfindung liegt die Aufgabe zugrunde, ausgehend von diesem Stand der Technik eine Vorrichtung der gattungsgemäßen Art zu schaffen, die besonders einfach und preiswert herstellbar ist.

Erfindungsgemäß wird dies durch die kennzeichnenden Merkmale des Patentanspruchs 1 erreicht.

Weitere vorteilhafte Ausgestaltungsmerkmale der Erfindung sind in dem abhängigen Anspruch 2 sowie der folgenden Beschreibung enthalten.

Anhand von in den beiliegenden Zeichnungen dargestellten Ausführungsbeispielen wird im folgenden die Erfindung näher erläutert. Dabei zeigen:
- Fig. 1: einen Teil-Axialschnitt einer erfindungsgemäßen Verbindungsvorrichtung,
- Fig. 2: einen Schnitt längs der Linie II-II mit Blick in Pfeilrichtung ohne Darstellung einer Sicherungskappe und
- Fig. 3 bis 5: alternative Ausbildungen der erfindungsgemäßen Verbindungsvorrichtung in Axialschnittdarstellungen.

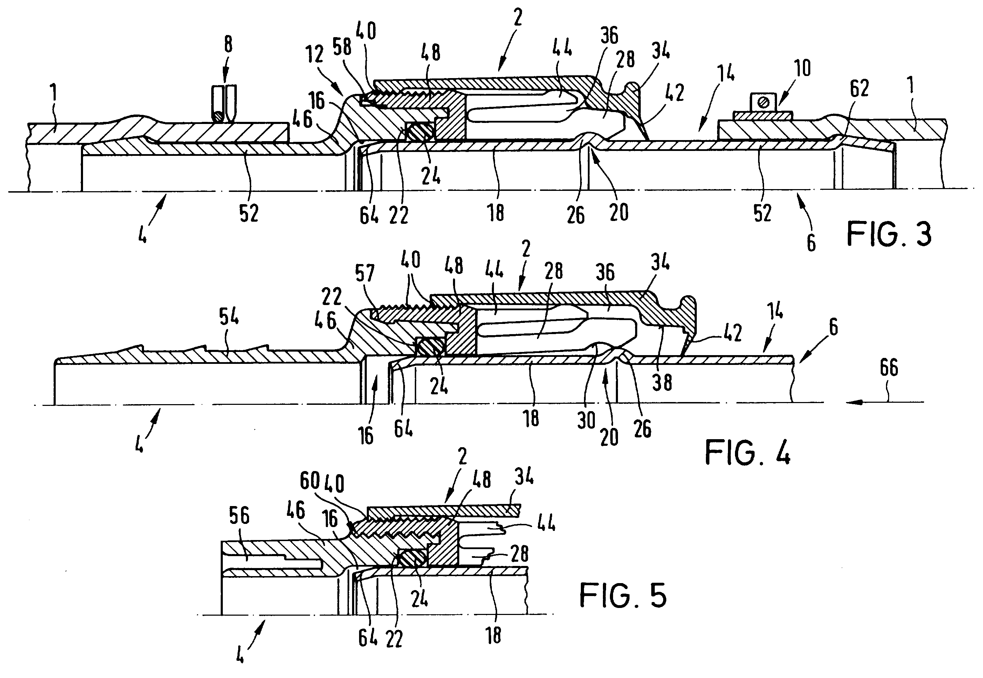

Eine erfindungsgemäße Vorrichtung zum gegenseitigen Verbinden von zwei Rohr- und/oder Schlauchleitungen 1 (siehe Fig. 3) besteht aus einem Verbindungselement 2 mit zwei gegenüberliegenden Anschlußstutzen 4, 6. Zur Montage der Leitungen 1 werden diese z.B. auf jeweils einen der Anschlußstutzen 4, 6 aufgesteckt und mit einer geeigneten Schelle fixiert. In Fig. 3 ist beispielhaft auf der linken Seite eine Drahtfeder-Schelle 8 und auf der rechten Seite eine Schraubschelle 10 angedeutet.

Das Verbindungselement 2 ist zweiteilig aus einem Aufnahmeteil 12 und einem Einsteckteil 14 ausgebildet. Beide Teile 12, 14 weisen jeweils einen der Anschlußstutzen 4, 6 auf. Das Aufnahmeteil 12 weist seinem Anschlußstutzen 4 gegenüberliegend eine Aufnahme 16 und das Einsteckteil 14 seinem Anschlußstutzen 6 gegenüberliegend einen Steckabschnitt 18 auf. Der Steckabschnitt 18 ist dichtend in die Aufnahme 16 einsteckbar und wird in der Aufnahme 16 über Rastmittel 20 lösbar arretiert.

Zur gegenseitigen Abdichtung ist in einer innerhalb der Aufnahme 16 des Aufnahmeteils 12 gebildeten Ringnut 22 ein Dichtring 24 angeordnet, der auf dem eingesteckten Steckabschnitt 18 des Einsteckteils 14 umfänglich dichtend aufliegt.

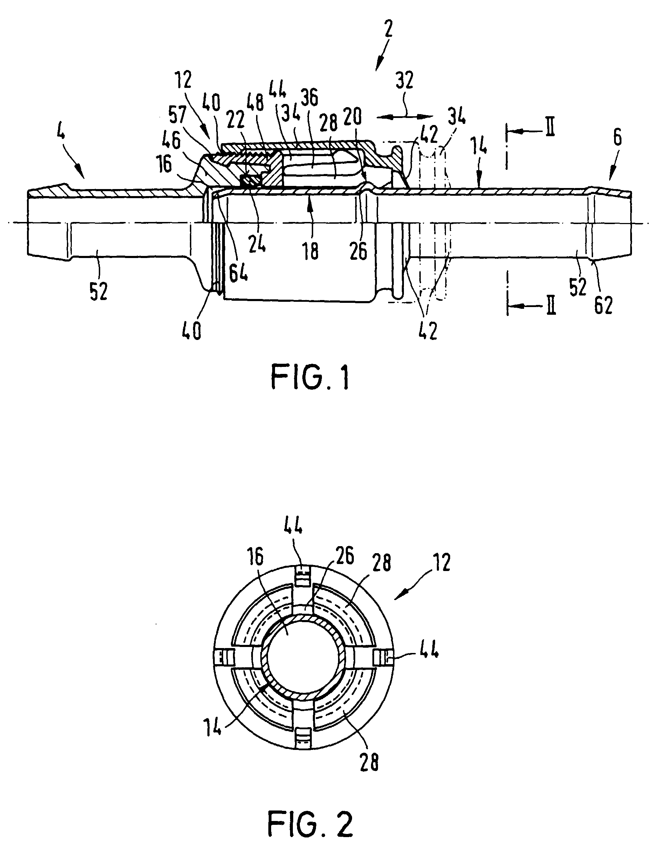

Die Rastmittel 20 sind einerseits durch eine umfängliche Ringwulst 26 am Steckabschnitt 18 des Einsteckteils 14 und andererseits durch axial angeordnete, radial federelastische Rastarme 28 des Aufnahmeteils 12 gebildet. Dabei weisen die Rastarme 28 an ihren freien Enden die Ringwulst 26 des in die Aufnahme 16 eingesteckten Einsteckteils 14 rastend umgreifende Vertiefungen 30 auf (siehe Fig. 4). Wie in Fig. 2 zu erkennen ist, sind vorteilhafterweise vier Rastarme 28 auf den Umfang des Aufnahmeteils 12 verteilt angeordnet. Vorzugsweise sind die Rastarme 28 einstückig an das Aufnahmeteil 12 angeformt und erstrecken sich axial in eine dem Anschlußstutzen 4 entgegengesetzte Richtung.

Zur Erhöhung der Sicherheit der Arretierung ist es besonders zweckmäßig, wenn das Aufnahmeteil 12 eine zwischen einer Lösestellung und einer Sicherungsstellung in Doppelpfeilrichtung 32 (Fig. 1) axialverschiebliche, im wesentlichen hohlzylinderförmige Sicherungskappe 34 trägt. Diese Sicherungskappe 34 umschließt die Rastarme 28 derart umfänglich, daß die Rastarme 28 in der Lösestellung (s. Fig. 4) innerhalb eines von der Sicherungskappe 34 umschlossenen Hohlraumes 36 radialbeweglich sind und in der Sicherungsstellung (s. Fig. 1 und 3) mit ihren freien Enden umfänglich an einer sich axial an den Hohlraum 36 anschließenden Arretierungs-Ringfläche 38 (s. insbesondere Fig. 4) der Sicherungskappe 34 anliegen. Dabei ist es vorteilhaft, wenn die Arretierungs-Ringfläche 38 der Sicherungskappe 34 sowie die freien Enden der Rastarme 28 derart konisch ausgebildet sind, daß die Rastarme 28 in der Sicherungsstellung der Sicherungskappe 34 unter radial nach innen wirkender Vorspannung stehen. Ein Öffnen bzw. ein Trennen der Verbindung ist in der Sicherungsstellung der Sicherungskappe 34 somit vorteilhafterweise ausgeschlossen, so daß auch bei einem eventuellen axialen Zug an den Leitungen 1 die Verbindung sicher aufrechterhalten wird.

Die Sicherungskappe 34 ist mit dem Aufnahmeteil 12 kraftformschlüssig verbunden. Hierdurch wird sichergestellt, daß ein axiales Verschieben der Sicherungskappe 34 in Doppelpfeilrichtung 32 erst ab einer bestimmten Betätigungskraft erfolgen kann, wodurch ein unbeabsichtigtes Verschieben in die Lösestellung und damit ein unbeabsichtigtes Trennen der Verbindung wirksam verhindert wird. Wie dargestellt, weisen das Aufnahmeteil 12 auf seinem Außenumfang sowie die Sicherungskappe 34 zumindest auf einem Teil ihres Innenumfanges umfängliche Rillungen 40 auf, die kraftformschlüssig ineinandergreifen.

Es ist weiterhin vorteilhaft, wenn die Sicherungskappe 34 im Anschluß an die Arretierungs-Ringfläche 38 eine umfängliche, radial nach innen ragende Dichtlippe 42 aufweist, die auf dem eingesteckten Einsteckteil 14 dichtend aufliegt. Die Dichtlippe 42 verhindert wirksam ein Eindringen von Verschmutzungen in den Hohlraum 36.

Zusätzlich zu der Dichtlippe 42, die bereits eine Führung und Zentrierung der Sicherungskappe 34 bewirkt, kann das Aufnahmeteil 12 axial angeordnete, innerhalb des von der Sicherungskappe 34 umschlossenen Hohlraumes 36 an deren Innenfläche anliegende Führungsarme 44 aufweisen. Gemäß Fig. 2 sind erfindungsgemäß vier umfänglich verteilt angeordnete Führungsarme 44 vorgesehen, die im wesentlichen parallel zu den Rastarmen 28 angeordnet sowie ebenfalls einstückig an das Aufnahmeteil 12 angeformt sind.

In einer vorteilhaften Weiterbildung der Erfindung besteht das Aufnahmeteil 12 aus zwei miteinander verbundenen Bauteilen 46, 48, wobei das Bauteil 46 den Anschlußstutzen 4 und das andere Bauteil 48 die Rastmittel 20 aufweist und die Sicherungskappe 34 trägt. Dabei ist von besonderem Vorteil, daß das die Rastmittel 20 und die Sicherungskappe 34 aufweisende Bauteil 48 stets gleich ausgebildet sein kann, während das Bauteil 46 unterschiedlich ausgebildete Anschlußstutzen 4 aufweisen kann. So kann gemäß Fig. 1 und 3 der Anschlußstutzen 4 als Schlauchtülle 52 für Schlauchleitungen, gemäß Fig. 4 als Einschlagdorn 54 für Rohrleitungen aus Kunststoff bzw. Metall und gemäß Fig. 5 als ringförmige Aufnahme 56 zum Einschweißen von Rohrleitungen ausgebildet sein. Bei der letztgenannten Ausbildung gemäß Fig. 5 erfolgt die Verbindung vorteilhafterweise durch Reibungsschweißen, wobei ein Rohr in die Aufnahme 56 eingeführt und eines der beiden Teile, d.h. entweder das Rohr oder der Anschlußstutzen 4, in Rotation versetzt wird, so daß aufgrund der entstehenden Reibung eine für die Schweißverbindung erforderliche Wärmeentwicklung verursacht wird.

Bei der zweiteiligen Ausbildung des Aufnahmeteils 12 kann vorteilhafterweise zwischen den beiden Bauteilen 46, 48 die Ringnut 22 für den Dichtring 24 gebildet sein.

In den Ausführungsformen gemäß Fig. 1 und 4 sind die beiden Bauteile 46, 48 des Aufnahmeteils 12 über eine Rastverbindung 57 miteinander verbunden. Hierzu weist das Bauteil 46 eine umlaufende Ringnut auf, in die ein umlaufender Ringsteg des anderen Bauteils 48 einrastet. Alternativ zu dieser Ausbildung ist in der Ausführungsform gemäß Fig. 3 zwischen den Bauteilen 46 und 48 eine Schweißverbindung 58 vorgesehen. Schließlich kann auch - wie in Fig. 5 dargestellt - zwischen den Teilen 46 und 48 eine Gewindeverbindung 60 bestehen, die zusätzlich verklebt sein kann.

Das Aufnahmeteil 12 besteht vorzugsweise aus Kunststoff. Auch die Sicherungskappe 34 besteht aus Kunststoff, der jedoch aufgrund des vorgesehenen Kraftformschlusses elastisch dehnbar sein muß.

Das Einsteckteil 14 besteht nun erfindungsgemäß aus einem einstückigen Rohrstück aus Kunststoff oder Metall, wobei eine Ringwulst 62 des Anschlußstutzens 6, die umfängliche Ringwulst 26 des Steckabschnittes 18 sowie eine an dem dem Anschlußstutzen 6 gegenüberliegenden Ende angeordnete Anfasung 64 spanlos durch Stauchung gebildet sind.

Mit der erfindungsgemäßen Verbindungsvorrichtung ist das Verbinden von zwei Leitungen 1 sehr schnell und einfach durchführbar. Die Leitungen 1 sind bereits an den Anschlußstutzen 4, 6 vormontiert. Die Sicherungskappe 34 befindet sich in der in Fig. 4 dargestellten Lösestellung (Vormontagestellung). Das Einsteckteil 14 wird mit seinem Steckabschnitt 18 axial in Pfeilrichtung 66 gemäß Fig. 4 zunächst durch die Dichtlippe 42 hindurch und in die Aufnahme 16 eingesteckt, bis die Rastarme 28 die Ringwulst 26 des Einsteckteiles 14 rastend umgreifen. In dieser Stellung wird die Verbindung bereits durch den Dichtring 24 abgedichtet. Schließlich braucht nur noch die Sicherungskappe 34 axial in die Sicherungsstellung verschoben zu werden, wodurch der in Fig. 1 und 3 dargestellte Zustand erreicht und die Verbindung gegen ungewolltes Lösen gesichert ist.

## Patentansprüche

1. Vorrichtung zum gegenseitigen Verbinden von zwei Rohr- und/oder Schlauchleitungen (1), insbesondere von Kraftstoffleitungen, bestehend aus einem Verbindungselement (2) mit zwei Anschlußstutzen (4,6) zum Aufstecken jeweils einer der Leitungen (1), wobei das Verbindungselement (2) zweiteilig aus einem Aufnahmeteil (12) und einem Einsteckteil (14) ausgebildet ist und diese beiden Teile (12, 14) jeweils einen der beiden Anschlußstutzen (4,6) sowie das Aufnahmeteil (12) seinem Anschlußstutzen (4) gegenüberliegend eine Aufnahme (16) und das Einsteckteil (14) seinem Anschlußstutzen (6) gegenüberliegend einen Steckabschnitt (18) aufweisen und der Steckabschnitt (18) dichtend in die Aufnahme (16) einsteckbar und in der Aufnahme (16) über Rastmittel (20) lösbar arretiert ist, wobei das Einsteckteil (14) im Bereich des Steckabschnittes (18) eine umfängliche Ringwulst (26) aufweist, die als Rastmittel (20) mit axial angeordneten, radial federelastischen Rastarmen (28) des Aufnahmeteils (12) zusammenwirkt, indem die Rastarme (28) an ihren freien Enden die Ringwulst (26) des eingesteckten Einsteckteils (14) rastend umgreifende Vertiefungen (30) aufweisen,
**dadurch gekennzeichnet**, daß das Einsteckteil (14) mit dem Anschlußstutzen (6), dem Steckabschnitt (18) einschließlich der als Rastmittel (20) mit den Rastarmen (28) und deren Vertiefungen (30) zusammenwirkenden Ringwulst (26) und einer an dem dem Anschlußstutzen (6) gegenüberliegenden Ende des Steckabschnittes (18) angeordneten Anfasung (64) sowie mit einer Ringwulst (62) des Anschlußstutzens (6) aus einem einstückigen, aus Kunststoff oder aus Metall bestehenden Rohrstück spanlos durch Stauchung gebildet ist.

2. Vorrichtung nach Anspruch 1,
**dadurch gekennzeichnet**, daß die Anschlußstutzen (4 bzw. 6) als Schlauchtülle (52) für Schlauchleitungen, als Einschlagdorn (54) für Rohrleitungen und/oder als ringförmige Aufnahme (56) zum Einschweißen von Rohrleitungen ausgebildet sind.

## Claims

1. Device for the interconnection of two pipe lines and/or hose lines (1), especially on fuel lines, consisting of a connecting element (2) with two junction pieces (4,6), each for the attachment of one of the lines (1), the connecting element (2) being designed in two parts comprising a receiving part (12) and an insertion part (14), and these two parts (12,14) each having one of the two junction pieces (4,6), and the receiving part (12) having a recepticle (16) located opposite its junction piece (4), and the insertion part (14) having a plug-in portion (18) located opposite its junction piece (6), and the plug-in portion (18) being insertable sealingly into the recepticle (16) and being releasably retained in the recepticle (16) via locking means (20), the insertion part (14) having in the region of the plug-in portion (18) a circumferential annular bead (26) which cooperates as locking means (20) with axially arranged, radially resilient locking arms (28) of the receiving part (12), in that the locking arms (28) have at their free ends depressions (30) engaging in a locking manner round the annular bead (26) of the inserted insertion part (14), characterized in that the insertion part (14) together with the junction piece (6), with the plug-in portion (18), including the annular bead (26) cooperating as locking means (20) with the locking arms (28) and their depressions (30), with a chamfer (64) arranged at that end of the plug-in portion (18) located opposite the junction piece (6) and with an annular bead (61) of the junction piece (6), is formed in a non-cutting manner by upsetting from a one-piece pipe section consisting of plastic or of metal.

2. Device according to Claim 1, characterized in that the junction pieces (4 or 6) are designed as a hose nozzle (52) for hose lines, as a knock-in broach (54) for pipe lines and/or as an annular recepticle (56) for the welding in of pipe lines.

## Revendications

1. Dispositif pour relier entre elles deux conduites tubulaires et/ou flexibles (1), en particulier deux conduites de carburant, ledit dispositif comportant un élément de liaison (2) muni de deux manchons de connexion (4, 6) pour y emboîter respectivement l'une des conduites (1), l'élément de liaison (2) étant réalisé en deux parties, à savoir un élément de réception (12) et un élément d'enfichage (14), ces deux parties (12, 14) présentant respectivement l'un des deux manchons de connexion (4, 6), l'élément de réception (12) comportant en outre, en regard de son manchon de connexion (4), une partie de réception (16), et l'élément d'enfichage (14) comportant, en regard de son manchon de connexion (6), une section d'enfichage (18), la section d'enfichage (18) pouvant être enfichée de manière étanche dans la partie de réception (16) et y être verrouillée de manière amovible grâce à des moyens d'arrêt (20), l'élément d'enfichage (14) présentant dans la région de la section d'enfichage (18) un bourrelet annulaire périphérique (26) qui coopère en tant que moyen de verrouillage (20) avec des bras d'arrêt (28) disposés axialement et radialement élastiques, de l'élément de réception (12), les extrémités libres des bras d'arrêt (28) comportant des évidements (30) qui entourent et bloquent le bourrelet annulaire (26) de l'élément d'enfichage (14) introduit,
caractérisé en ce que l'élément d'enfichage (14), est une portion de tuyau en une pièce, réalisée en une matière ynthétique ou en métal, le manchon de connexion (6), la section d'enfichage (18) avec le bourrelet annulaire (26) coopérant en tant que moyen de verrouillage (20) avec les bras d'arrêt (28) et les évidements (30) de ceux-ci, ainsi qu'un chanfrein (64) formé sur l'extrémité de la section d'enfichage (18) en regard du manchon de connexion (6), et un bourrelet annulaire (62) du manchon de connexion (6), étant formés par déformation sous pression.

2. Dispositif selon la revendication 1,
caractérisé en ce que les manchons de connexion (4 ou 6) ont la forme d'un embout à olive (52) pour tuyaux flexibles, d'un embout cranté à enfoncer (54) pour conduites tubulaires et/ou d'un moyen de réception annulaire (56) pour fixer à l'intérieur des conduites tubulaires par soudage.
